# EUROPÄISCHE PATENTANMELDUNG

(11) **EP 1 810 990 A2**
(43) Veröffentlichungstag der Anmeldung: **25.07.2007**
(21) Anmeldenummer: 07000306.6
(22) Anmeldetag: 09.01.2007
(51) Int. Cl.: C08K 3/16

(54) **Kunststofferzeugnis für die Landwirtschaft zur Umwandlung von IR-Anteilen der globalen Strahlung in sichtbares Licht**

(30) Priorität: 12.01.2006 DE 102006002454
(71) Anmelder: GRAFE Color Batch GmbH, 99444 Blankenhain (DE)
(72) Erfinder: Caro, Carlos, Dr., 99425 Weimar (DE)
(74) Vertreter: Oehmke, Volker

(57) **Zusammenfassung**

Die Erfindung betrifft ein Kunststofferzeugnis, das anorganische Substanzen enthält, die die IR-Anteile des Spektrums absorbieren und in sichtbares Licht verschiedener Wellenlänge, vorzugsweise in rot, grün und blau, umwandeln. Es kommt zur Emission von Licht im sichtbaren Bereich unter gleichzeitiger Reduzierung der wärmebringenden Anteile der IR-Strahlung.

Die Erfindung besteht darin, dass mindestens eine anorganische Substanz zur Erhöhung der Photosyntheserate chlorophyllhaltiger Zellen und Pflanzen, die die Anteile der globalen IR-Strahlung mit einer Wellenlänge über 780 nm absorbiert und Licht im sichtbaren Bereich zwischen 380 nm und 780 nm emittiert, in Agrar-Bedachungen, Gewächshausfolien, Doppelstegplatten, Netzen und Geweben aus thermoplastischen Materialien eingebracht wurde.

## Beschreibung

Die Erfindung betrifft ein Kunststofferzeugnis, das anorganische Substanzen enthält, die die IR-Anteile des Spektrums absorbieren und in sichtbares Licht verschiedener Wellenlänge, vorzugsweise in rot, grün und blau, umwandeln. Es kommt zur Emission von Licht im sichtbaren Bereich unter gleichzeitiger Reduzierung der wärmebringenden Anteile der IR-Strahlung.

Diese IR-absorbierenden und sichtbares Licht emittierenden Substanzen werden im englischen Sprachgebrauch mit dem Begriff "Up-Converter" beschrieben. Den Vorgang selbst der Absorption von Energie höherer Wellenlänge (IR-Bereich über 780 nm) unter gleichzeitiger Emission von Energie niedriger Wellenlänge (unterhalb 780 nm) nennt man "Up-Conversion".

Die Up-Converter gehören zu den sogenannten unsichtbaren, nichtnachleuchtenden Fluoreszenzpigmenten. Dazu gehören auch die Gruppe der anorganischen Fluoreszenzpigmente, die Licht unter Absorption von UV-Licht im sichtbaren Bereich emittieren. Das heißt, aus den energiereichen Bereichen unterhalb 400 nm wird Energie in Form von Licht höherer Wellenlänge von 400 nm bis 780 nm freigesetzt. Die Pigmente tragen keine Eigenfarbe zum Endprodukt bei.

Physikalisch gesehen wird ein Ion mit Hilfe von Energie aus dem Grundzustand A in den angeregten Zustand B gebracht. Im Normalfall kommt das Ion wieder von B nach A in den Grundzustand zurück, jedoch wenn die Lebensdauer des angeregten Ions in B lang genug für eine weitere Anregung ist, dann geht das angeregte B-Ion in einen neuen angeregten Zustand C über. Letztlich tritt Emission von Licht (z. B. grünes Licht) beim Übergang vom C-Zustand in den Grundzustand A zurück. Um ein Photon zu emittieren, müssen mindestens 2 Photonen absorbiert werden. Dadurch wird gewährleistet, dass der Vorgang der Up-Conversion von niedrigen in höhere Energiebereiche oder vom IR- zum sichtbaren Bereich bewerkstelligt wird. Zum Beispiel um Licht aus dem IR- in den Blau-Bereich zu emittieren, muss das angeregte C-Ion in einen höheren angeregten Zustand D gebracht werden. Insgesamt benötigt man dafür 3 Photonen-Übergänge: von A nach B, B nach C und C nach D. Die Emission erfolgt aus dem Übergang von D nach A zurück.

Um einen Up-Converter herzustellen, benötigt man als Basismaterial eine Substanz mit optisch aktiven Ionen und stabilen Energiezuständen, sodass zwei oder mehr Photonen gleicher Wellenlänge absorbiert werden können, bevor es zur Emission kommt.

Up-Converter bestehen vorwiegend aus Fluoriden des Natriums, Lithiums oder Yttriums z. B. als NaYF₄, NaSrF₄, NaLaF₄, LiYF₄ oder YF₃ als festes Grundgitter. Auch Oxide können verwendet werden, sie zeigen aber gegenüber Fluoriden eine geringere Stabilität.

Diese Substanzen allein sind jedoch nicht wirkungsvoll, wenn es darum geht, Anteile aus dem IR-Bereich in sichtbares Licht umzuwandeln. Dies hat man durch eine Kombination von zwei Ionen (z. B. Ion 1 und 2) bewerkstelligt. Sie werden in die vorhin genannte stabile Gitterstruktur aus NaYF₄, NaSrF₄, NaLaF₄, LiYF₄ oder YF₃ dotiert.

Die zwei Ionen arbeiten gemeinsam beim Transport und Emission von Energie. Für den Fall einer Emission z. B. im grünen Bereich absorbiert Ion 1 die Energie mit Hilfe von 2 Photonenübergängen. Danach transferiert Ion 1 diese aufgenommene Energie zum Ion 2. Ion 2 ist lediglich für die Emission des Photons zuständig, wenn es vom angeregten Zustand in den Grundzustand zurückgehen muss. Da das Ion 2 bei der Aufnahme der Energie des Ions 1 nicht in einen neuen angeregten Zustand gebracht wird, wird es für die Emission von Licht verwendet.

Zu diesem Zweck hat man 3-wertige Lanthanoide (oder seltene Erdmetalle) als Dotierungselement als Optimal ausgewählt. Jedoch ist nicht jedes Element, das zur Gruppe der Lanthanoide gehört, dafür geeignet.

Es hat sich herausgestellt, dass Holmium (Ho), Erbium (Er), Ytterbium (Yb) und Thulium (Tm) als Dotierungsmetalle für das Grundgitter sehr gut geeignet sind.

Eine Emission im grünen Bereich des sichtbaren Spektrums unter Absorption von Energie aus dem IR-Bereich erreicht man nach Stand der Technik durch Dotierung von NaYF₄ mit Er³⁺ und Yb³⁺ in den Endkonzentrationen von jeweils 2% bzw. 18%.

Eine Emission im blauen Bereich des sichtbaren Spektrums unter Absorption von Energie aus dem IR-Bereich erreicht man nach Stand der Technik durch Dotierung von NaYF₄ mit Yb³⁺ und Tm³⁺ in den Endkonzentrationen von jeweils 25% bzw. 0,3%.

Eine Emission im Blau-Bereich kann man anderweitig auch durch LiYF₄ als Basisgitter unter Dotierung mit Yb³⁺ und Tm³⁺ erreichen.

Eine Emission im roten Bereich des sichtbaren Spektrums unter Absorption von Energie aus dem IR-Bereich erreicht man durch Dotierung von YF₃ als Basisgitter mit Er³⁺ und Yb³⁺.

Das Ytterbium (Yb) ist für die Absorption der NIR-Strahlung und für den Transport dieser Energie zum zweiten dotierten Element verantwortlich. Diese Energie wird durch das zweite dotierte Element, z. B. Holmium, Erbium oder Thulium, für die Emission von rotem, grünem oder blauem Licht verwendet.

Unter den vielen möglichen Laborkombinationen zeigen diese Up-Converter eine hohe Reproduzierbarkeit und Stabilität beim Absorbieren von NIR-Strahlung und Emittieren von sichtbarem Licht.

Kennt man die Eigenschaften und Wirkungen von Up-Convertern sowie aktuelle Einsatz- und Forschungsgebiete, z. B. für Flachbildschirme, Solarzellen- und Halbleitertechnologie, besteht der Zweck der vorliegenden Erfindung darin, diese Substanzen in Verbindung mit thermoplastischen Materialien für den Agrarbereich in Verbindung zu bringen, um mit Hilfe der vorher beschriebenen physikalischen und chemischen Eigenschaften solche Probleme zu lösen und Optimierungsvarianten vorzustellen, die sich mit der Vorverlegung von Blüh-Zeiträumen, Verfrühung von Befruchtungsphasen und Erntevorgängen, Ertragssteigerung von Früchten und Gemüsesorten, Verbesserung von Qualitätsmerkmalen bei Schnittblumen und Zierpflanzen, Aktivierung und Beschleunigung von Photosynthese-Prozessen, und Wachstumsreaktionen chlorophyllhaltiger Zellen beschäftigen.

Ausführliche Literaturstellen über die Anwendung von Up-Convertern in Agrarbedachungen aus thermoplastischen Materialien zur Erhöhung der Transmission und des Lichtangebotes im PAR-Bereich, durch die Absorption und Umwandlung von NIR-Strahlung in sichtbares Licht, sowie deren Wirkung auf chlorophyllhaltige Zellen sind nicht auffindbar.

Jedoch, wie vorher berichtet, finden sich zahlreiche Publikationen und Patentanmeldungen über die Absorption von UV-Licht und Emission von sichtbarem Licht, speziell blau und rot, mit Hilfe von anorganischen und organischen Fluoreszenzpigmenten. Weitere genannte Themen sind Interferenz-Pigmente zur Reflektion von NIR-Strahlung und Optimierung des Hellrot/Dunkelrot-Verhältnisses in Gewächshausbedachungen durch die Anwendung von rotes Licht emittierenden anorganischen Pigmenten.

Die Modifizierung der Pflanzenmorphologie und -physiologie zur Verbesserung des Aussehens von Schnittblumen und Zierpflanzen zu Dekorationszwecken auf einer Seite, die Ernteverfrühung und die Erhöhung des Ertrages von Obst und Gemüse auf der anderen Seite gehören zu den wichtigsten Zielen im Agrarbereich, wenn man professionell und unter optimierten Anbaubedingungen einen nachhaltigen Erfolg erreichen möchte.

Um den Ertrag zu erhöhen, könnte man die Ackerfläche vergrößern und somit die absolute Menge an Obst und Gemüse signifikant erhöhen. Jedoch bleibt der Ertrag pro m² maßgebend.

Eine andere Möglichkeit ist, im gleichen Zeitraum eine Ernte-Verfrühung durch Wachstumsbeschleunigungsprozesse zu erzielen. Dies kann man durch die Anwendung von photoselektiven und photosensitiven Materialien erreichen. Optimal eingesetzt werden diese Materialien in Bedachungen und Abdeckungen, da diese die Art und Qualität des einfallenden Lichtes beeinflussen.

Untersuchungen haben ergeben, dass Pflanzen generell nur einen bestimmten Bereich der globalen Sonneneinstrahlung zum Wachsen benötigen. Dieser Bereich ist zwischen 380 und 780 nm enthalten. Man nennt es den PAR-Bereich (aus dem Englischen "Photosynthetic Active Radiation") und geht von 400 bis 700 nm. Daraus ergibt sich, dass der UV-Bereich für den Pflanzenwachstumsprozess nicht unmittelbar und nicht direkt gebraucht wird. Jedoch brauchen Nutzinsekten für die Orientierung im Flug UV-Licht. Dadurch finden sie die Blüten und gewährleisten die Befruchtung, wodurch die gewünschte Bildung von Früchten (Tomaten, Paprika, Melonen etc.) erreicht wird.

Auch der NIR-Bereich, wo 95% der einfallenden Wärme enthalten ist, ist für das Pflanzenwachstum eigentlich von Nachteil, da hier kein Beitrag zur Transmissions-Verbesserung geleistet wird. Es ist bekannt, dass die Photosyntheserate der Pflanzen am höchsten ist, wenn Temperaturen zwischen 20 und 30°C herrschen. Höhere Temperaturen verringern die Geschwindigkeit der Photosynthese und verzögern den Wachstumsprozess.

Substanzen, die durch die Bereitstellung von mehr Licht im PAR-Bereich aktiv wirken, können in Agrarbedachungen, unabhängig vom diffusen und trüben Lichteinfall, eine Wachstumsbeschleunigung verursachen und somit zu einer Erhöhung des Ertrages führen.

Bedingt durch die Chemie und Physik der Polymermaterialien, die zur Herstellung von Gewächshausfolien und -platten verwendet werden, sowie durch die notwendige Zugabe von weiteren Additiven wie Flammschutzmittel, UV-Stabilisatoren, UV-Absorbern, Light Diffuser, Füller, Antifog-Additiven etc., wird der Haze-Wert bzw. die Trübung und Transparenz des Bedachungsmaterials beeinflusst. Das hat zur Folge, dass die Licht-Transmission im sichtbaren Bereich und somit im PAR-Bereich verringert wird. Ein Lichttransmissionswert unterhalb 80% bietet verminderte Wachstumsbedingungen für die Pflanze. Daher ist die zusätzliche Emission von Licht im sichtbaren Bereich, selbst bei einer reduzierten Licht-Transmission, in jedem Fall erstrebenswert.

Organische Fluoreszenz-Pigmente mit chromophoren Gruppen, sogenannte "Fluorescence Whitening Agent", die als optischer Aufheller, unter Absorption von UV-Licht und Emission von Licht verschiedener Wellenlänge, speziell im Blau-Bereich, agieren, sind Stand der Technik und ihre Anwendung, Nachteile und Vorteile im Agrarbereich sind bereits beschrieben und bekannt.

Anorganische, nicht nachleuchtende Fluoreszenz-Pigmente, sogenannte "Inorganic Phosphors", die Licht verschiedener Wellenlänge des sichtbaren Bereichs, unter Absorption von UV-Licht, emittieren, sind Stand der Technik und ihre Anwendung, Nachteile und Vorteile im Agrarbereich bereits beschrieben und bekannt.

Anorganische, nicht nachleuchtende Fluoreszenz-Pigmente, die eine Eigenfärbung mit sich bringen, vorzugsweise Rot/Orange, können nach Anregung mit UV-Licht nur rotes Licht emittieren. Ihr Ziel ist, das Hellrot-zu-Dunkelrot-Verhältnis zugunsten mehr Hellrot zu verschieben. Sie sind Stand der Technik und ihre Anwendung im Agrarbereich bereits beschrieben und bekannt.

Anorganische nanoskalige Substanzen auf Basis von Oxiden des Indiums, Zinns oder Antimons, die Energie im NIR-Bereich absorbieren und gleichzeitig eine hohe Transmission im PAR-Bereich aufweisen, jedoch selbst keinen eigenen aktiven Beitrag zur Erhöhung dieser PAR-Transmission leisten, führen zu einer Reduzierung der Wärme innerhalb der Gewächshäuser, zur Verbesserung der Lichtqualität und zu einem verbesserten Wachstumsklima für die Pflanzen. Sie sind dem Stand der Technik zu entnehmen. Ihre Anwendung im Agrarbereich ist auch bereits beschrieben und bekannt.

Neuartig jedoch zwangsläufig aus den vorherigen Aussagen ableitbar wäre unter Umständen auch eine Kombination von mindestens zwei Substanzen, chemisch und physikalisch aus unterschiedlichem Background, in einem thermoplastischen Material, die gleichzeitig sowohl im NIR- als auch im UV-Bereich aktiv wirken, wodurch die wärmebringenden IR-Anteile der globalen Strahlung absorbiert werden, und gleichzeitig UV-Licht absorbiert und in sichtbares Licht innerhalb des PAR-Bereiches umgewandelt wird. Beide Substanzen heben sich in ihren Wirkungen nicht gegenseitig auf und können parallel agieren.

Mit der Anwendung von Up-Convertern in thermoplastischen Materialien wäre man jedoch in der Lage, beide Effekte (die NIR-Absorption und die gleichzeitige Licht-Emission im PAR-Bereich) mit einer einzigen Substanz zu vereinen, statt zwei verschiedene Substanzzugaben im Endprodukt verwenden zu müssen.

Da der Up-Converter mindestens 2 Photonen absorbieren muss, um ein einziges Lichtphoton (z. B. im Grün) zu emittieren, beträgt, theoretisch, der Anteil der IR-Strahlung, die in sichtbares Licht überhaupt mit diesen Substanzen umgewandelt und emittiert werden kann, maximal 50%.

Mit Hilfe von bereits bekannten und dem Stand der Technik zu entnehmenden Extrusionstechniken können die Up-Converter in vielen thermoplastischen Kunststoffen, wie PE, PP, PET, PC, PMMA etc., eingearbeitet werden, um daraus sowohl die Vorstufen als auch die eigentlichen Agrar-Bedachungen, wie Abdeckungen, Bedachungen, Gewächshausfolien, Netze, Doppelstegplatten etc., für die Landwirtschaft herzustellen.

In thermoplastischen Materialien sind Zuladungen der Up-Converter in reiner Form durch Standard-Extrusionstechniken bis zu 20 Gew.% verarbeitbar. Dies ermöglicht die wahlweise Bereitstellung der Vorstufen als Compound oder als Masterbatch. Höhere Zuladungen sind technisch machbar jedoch ökonomisch nicht sinnvoll.

Die Dicke der extrudierten Erzeugnisse bestimmt die Konzentration an Up-Converter, die ausreichend für einen positiven Effekt ist. Jedoch existiert eine maximale Konzentration an aktiven Substanzen, worüber hinaus keine weitere signifikante Verbesserung in Ertrag, Verfrühung und Qualität mehr eintritt. Diese hier genannte Sättigungskonzentration ist von vielen Faktoren abhängig, hauptsächlich aber von der Pflanzenart, den jeweiligen Anbaubedingungen (Ort, Klima, Biologie etc.) und den Eigenschaften des thermoplastischen Erzeugnisses, worin die Up-Converter enthalten sind.

Erfahrungsberichte bei der Anwendung von anorganischen, nichtnachleuchtenden Fluoreszenzpigmenten in thermoplastischen Materialien für Agrarbedachungen gehen von ausreichenden Konzentrationen im Endprodukt von bis zu 5 Gew.% aus.

Auch können die Up-Converter als Beschichtung, z. B. auf der fertigen AgrarBedachung, vorliegen. Hier ist keine Extrusion nötig, aber eine Bereitstellung in Form einer auftragbaren Dispersion von Vorteil.

Die Up-Converter sollen nicht nur zu einer Reduzierung der Temperatur innerhalb der Agrarstruktur führen, sondern auch aktiv eine Erhöhung des Lichtangebotes im PAR-Bereich ermöglichen.

Eine Gewächshausfolie oder eine Doppelstegplatte für ein Gewächshaus, gerüstet mit diesem Up-Converter, kann demzufolge der Idee einer universellen photoselektiven Agrarbedachung näher kommen, nämlich, unabhängig von den Lichtverhältnissen und Standorten des Gewächshauses einen positiven Verfrühungs- und Ertragseffekt zu ermöglichen.

Es werden bessere Licht- und Temperaturverhältnisse geschaffen, wo vorher zwar viel Licht aber auch viel Wärme durch die Klimabedingungen geschaffen wurden.

Aber auch mit wenig Sonnenlicht und vielen Wolken erreicht man mit den Up-Convertern optimale Wachstumsbedingungen dadurch, dass zusätzliches Licht (Rot, Grün oder Blau) im PAR-Bereich emittiert wird.

Zuerst wird die Temperatur innerhalb des Gewächshauses reduziert, bedingt durch die Verringerung der wärmebringenden IR-Anteile der globalen Strahlung, die auf das Dach der Agrar-Konstruktion einfallen. Gleichzeitig wird die Transmission und das Lichtangebot im PAR-Bereich erhöht, bedingt durch die Emission von sichtbarem Licht (im Rot, Grün oder im Blau).

Das zusätzliche Licht im Blau-Bereich gepaart mit einer Verringerung der wärmebringenden Anteile der IR-Strahlung würde bei den Pflanzen in die Bildung von mehr Früchte tragenden Verzweigungen und Trieben resultieren.

Bei Tomaten z. B. würden mehr Verzweigungen und Triebe dazu führen, dass mehr Früchte pro neuem Trieb und Pflanze gebildet und geerntet werden. Somit wird ein Mehrertrag erreicht. Außerdem verhält sich die Reduktion der Temperatur in sehr heißen Klimazonen wachstumsbegünstigend, da man weiß, dass die Photosyntheserate bei Temperaturen um 30°C am höchsten ist.

Bei Basilikum werden die zusätzlichen Triebe dazu führen, dass es mehr Blätter pro Pflanze gibt. Außerdem werden die Blätter größer, wodurch die Qualität des Basilikums erhöht wird.

Bei Paprika-Pflanzen wird der Blüh-Vorgang beschleunigt. Das bedeutet, dass die Befruchtung zu einem früheren Zeitpunkt als sonst üblich stattfinden kann. Ist die Befruchtung der Pflanzen vorverlegt, ist mit einer verfrühten Bildung, Entwicklung und Ernte der Früchte zu rechnen. Sie können demzufolge zu einem früheren Zeitpunkt auf den Markt gebracht und verkauft werden. Außerdem können im gleichen Zeitraum mehr Früchte pro Pflanze geerntet werden.

## Patentansprüche

1. Verwendung von mindestens einer anorganischen Substanz zur Erhöhung der Photosyntheserate chlorophyllhaltiger Zellen und Pflanzen, die die Anteile der globalen IR-Strahlung mit einer Wellenlänge über 780 nm absorbiert und Licht im sichtbaren Bereich zwischen 380 nm und 780 nm emittiert, in Agrar-Bedachungen, Gewächshausfolien, Doppelstegplatten, Netzen und Geweben aus thermoplastischen Materialien.

2. Verwendung nach Anspruch 1, **dadurch gekennzeichnet, dass** diese anorganische Substanz Natrium Yttrium Fluorid, dotiert mit Erbium (Er) und Ytterbium (Yb) oder dotiert mit Ytterbium und Thulium (Tm) ist.

3. Verwendung nach Anspruch 1, **dadurch gekennzeichnet, dass** diese anorganische Substanz Lithium Yttrium Fluorid, dotiert mit Erbium (Er) und Ytterbium (Yb) oder dotiert mit Ytterbium und Thulium (Tm) ist.

4. Verwendung nach den Ansprüchen 1 bis 4, **dadurch gekennzeichnet, dass** das thermoplastische Material für die Agrarbedachung mindestens eine der folgenden Substanzen enthält: UV-Stabilisatoren, UV-Absorber, Kreide, Kaolin, Titandioxid, Silica, Antitau-Mittel, Farbmittel, Pigmente, Flammschutzmittel, Gleitmittel, Antistatika und Ruß.

5. Verwendung von mindestens einer anorganischen Substanz in Form einer auftragbaren Beschichtung zur Erhöhung der Photosyntheserate chlorophyllhaltiger Zellen und Pflanzen, die die Anteile der globalen IR-Strahlung mit einer Wellenlänge über 780 nm absorbiert und Licht im sichtbaren Bereich zwischen 380 nm und 780 nm emittiert, in Agrar-Bedachungen, Gewächshausfolien, Doppelstegplatten, Netzen und Geweben aus thermoplastischen Materialien.
